# FASCICULE DE BREVET EUROPEEN

(11) **EP 1 878 344 B1**
(45) Date de publication et mention de la délivrance du brevet: **12.08.2009**
(21) Numéro de dépôt: 07301210.6
(22) Date de dépôt: 06.07.2007
(51) Int. Cl.: A01N 25/18, A01N 65/00

(54) **Dispositif microbistatique ainsi qu'emballage renfermant un tel dispositif**
Mikrobistatische Vorrichtung sowie Verpackung für eine solche Vorrichtung
Microbistatic device and packaging enclosing such a device

(30) Priorité: 11.07.2006 FR 0652899
(43) Date de publication de la demande: 16.01.2008
(73) Titulaire: Magnus Industrie Developpement, 14000 Caen (FR)
(72) Inventeur: Le Dily, Frédérik, 14970, BENOUVILLE (FR); Legrand, Marc, 14000, CAEN (FR); Roussel, Edmond, 14770, DANVOU LA FERRIERE (FR)
(74) Mandataire: Livet, Marie-José

(56) Documents cités:
- DATABASE WPI Week 199146 Derwent Publications Ltd., London, GB; AN 1991-336444 XP002415458 & JP 03 226475 A (ITO S) 7 octobre 1991 (1991-10-07)
- DATABASE CA [Online] CHEMICAL ABSTRACTS SERVICE, COLUMBUS, OHIO, US; LEE, BYEONG HUI ET AL: "Crop quality-preserving agent containing stabilized mustard and/or horseradish extracts and receiving pack thereof" XP002412046 extrait de STN Database accession no. 2004:970746 & KR 2003 015 512 A (AE KYUNG INDUSTRIAL CO., LTD., S. KOREA .,) 25 février 2003 (2003-02-25)
- DATABASE WPI Week 200369 Derwent Publications Ltd., London, GB; AN 2003-724977 XP002415459 & JP 2003 128152 A (MATSUSHITA DENKI SANGYO KK) 8 mai 2003 (2003-05-08)
- DATABASE CA [Online] CHEMICAL ABSTRACTS SERVICE, COLUMBUS, OHIO, US; MASUDA, HIDEKI ET AL: "Antimicrobial activities of isothiocyanates" XP002412047 extrait de STN Database accession no. 2001:917340 & ACS SYMPOSIUM SERIES , 794(AROMA ACTIVE COMPOUNDS IN FOODS), 229-250 CODEN: ACSMC8; ISSN: 0097-6156, 2001,
- DATABASE CA [Online] CHEMICAL ABSTRACTS SERVICE, COLUMBUS, OHIO, US; YAMADA, NOBORU ET AL: "Sustained- release microbicidal allyl isothiocyanate compositions" XP002412048 extrait de STN Database accession no. 1992:569888 & JP 04 207179 A2 (GREEN CROSS CORP., JAPAN; OJIRO YUKAGAKU KENKYUSHO K. K.) 29 juillet 1992 (1992-07-29)
- DATABASE CA [Online] CHEMICAL ABSTRACTS SERVICE, COLUMBUS, OHIO, US; OSHIDA, YUTAKA: "Natural allyl isothiocyanate preparation for preservation of fruit and vegetable" XP002412049 extrait de STN Database accession no. 2004:609090 & JP 2004 208558 A2 (MITSUBISHI GAS CHEMICAL CO., LTD., JAPAN) 29 juillet 2004 (2004-07-29)

## Description

La présente invention a pour objet un procédé permettant d'augmenter la qualité sanitaire et/ou la durée de conservation d'un produit périssable conditionné dans un emballage fortement étanche aux gaz, notamment d'un produit alimentaire tel qu'un produit frais ou semi-frais près à l'emploi ou un plat préparé industriel.

Ces dernières décennies, on a pu observer un changement radical des habitudes alimentaires des habitants des pays industrialisés, essentiellement consécutif au nombre croissant de femmes travaillant à l'extérieur et n'ayant plus qu'un temps limité à consacrer à la préparation des repas.

Pour tenir compte de cette situation, les industriels ont récemment mis au point une large gamme de produits et de denrées prêts à consommer, conditionnées sous atmosphère contrôlée dans des emballages (sacs ou barquettes) plus ou moins étanches aux gaz et présentées au rayon « frais » des grandes surfaces.

Ces denrées peuvent être de type très varié et en particulier constituées par des produits frais ou semi-frais prêts à l'emploi (crudités, fruits découpés, fromages, viandes ou poissons crus...) ou encore par des plats cuisinés à base de viande, de poisson ou de légumes, des plats de charcuterie ou de charcuterie pâtissière tels que quiches ou pizzas, ou encore des entrées ou plats de pâtisseries sucrées...

Pour concevoir de telles denrées, les spécialistes des industries agro-alimentaires doivent tenir compte des exigences des consommateurs qui recherchent des produits sains autant que possible exempts d'additifs ou de conservateurs de synthèse, dont les qualités organoleptiques soient proches de celles des produits natifs et qui soient parallèlement pratiques d'emploi, avec une durée de conservation aussi longue que possible.

Or, ces exigences ne sont pas toujours compatibles avec celles imposées par la réglementation qui est de plus en plus sévère en matière d'hygiène et de sécurité des aliments.

L'un des principaux obstacles à la conservation des denrées alimentaires prêtes à consommer est lié au développement de micro-organismes qui entraînent une dégradation de la qualité sanitaire et/ou organoleptique de l'aliment qui devient à la longue impropre à la consommation.

Pour remédier à cet inconvénient, les spécialistes ont déjà eu l'idée d'introduire dans les emballages dans lesquels sont conditionnées les denrées alimentaires prêtes à consommer des dispositifs ayant pour fonction de contrôler et autant que possible d'éviter le développement de ces micro-organismes.

De tels dispositifs renferment des matières actives qui agissent en bloquant les gaz présents dès l'origine dans l'emballage ou générés dans celui-ci au cours de la conservation par des processus chimiques ou biologiques, ou encore en générant « in situ » des gaz susceptibles d'améliorer la conservation des denrées conditionnées.

Dans ce contexte, on a eu l'idée conformément à l'invention d'utiliser les propriétés microbistatiques des isothiocyanates (ITC) pour augmenter la qualité sanitaire et/ou la durée de conservation d'un produit périssable conditionné dans un emballage fortement étanche aux gaz.

Les propriétés microbistatiques (fongistatiques, bactériostatiques, insecticides) des ITC de formule

R - N = C = S

(où R est un radical chimique de nature structurale variable)
sont connues depuis longtemps et ont largement déjà été décrites dans la littérature.

Il est également connu depuis longtemps que certains végétaux, en particulier les crucifères, sont capables dans certaines conditions de dégager des composés volatils soufrés et notamment des ITC et peuvent ainsi se protéger naturellement des bio-agresseurs.

Ces propriétés sont traditionnellement utilisées dans le domaine de l'agriculture notamment dans le cadre d'une pratique ancestrale : la bio-fumigation qui consiste à enfouir dans le sol, une culture intermédiaire le plus souvent de crucifères en intersaison.

La matière organique végétale enfouie a trois fonctions, à savoir une fonction nutritionnelle en qualité d'engrais naturel, une fonction de texturation du sol et une fonction d'assainissement du sol.

Cette troisième fonction résulte de la génération de vapeurs bistatiques et en particulier d'ITC qui permettent de protéger la culture suivante contre les phytopathogènes (notamment des champignons et des bactéries), en assainissant le sol.

Les spécialistes ont pu établir que l'aptitude de toutes les crucifères à libérer des ITC (avec un spectre - c'est-à-dire des radicaux R - différent selon la plante) est liée à la présence de substrats particuliers existant naturellement chez ces espèces, à savoir les glucosinolates qui n'ont en eux-mêmes aucune valeur microbistatique.

Les glucosinolates se transforment en effet en ITC grâce à l'action d'une enzyme endogène, la myrosinase et en présence d'humidité.

Dans la plante vivante, les glucosinolates et la myrosinase sont dans des compartiments séparés et ne sont pas au contact de sorte que la réaction de production des ITC ne se produit pas.

En revanche, suite à une agression provoquée par toute coupure ou blessure qui correspond à une source d'entrée d'agents microbiens, les glucosinolates et la myrosinase entrant en contact l'un de l'autre. La plante se défend alors en transformant naturellement les glucosinolates en glucose et en ITC microbistatiques.

Les glucosinolates sont ainsi des précurseurs d'ITC.

Il est à noter que l'on a déjà eu l'idée d'utiliser les propriétés microbistatiques des ITC pour la préservation de produits alimentaires.

On a ainsi déjà proposé des dispositifs microbistatiques renfermant une matière active émettrice d'ITC d'origine végétale ou de synthèse.

Toutefois dans ces dispositifs, cette matière active, en règle générale les ITC eux-mêmes, est obtenue par voie semi-naturelle ou par synthèse chimique, ce qui de plus exige en règle générale la mise en oeuvre d'étapes d'extraction par solvant, de mise en solution, de concentration... ce qui n'est pas recommandé par la réglementation.

De plus de tels dispositifs microbistatiques ne peuvent émettre qu'un spectre limité d'ITC.

Or, il est avantageux d'élargir au maximum le spectre d'ITC émis dans la mesure où un micro-organisme peut être sensible à un ITC 1 et non à un ITC2 alors qu'un autre sera sensible à l'ITC 2 mais pas à l'ITC1.

Un autre inconvénient des dispositifs microbistatiques connus est lié au fait que la matière réactive est adsorbée sur un support, en règle générale de type buvard et est intrinsèquement apte à relarguer immédiatement des ITC.

Il est par suite nécessaire de contrôler en permanence ce dégagement d'ITC avant utilisation en protégeant la matière réactive dans des emballages étanches coûteux dont la manipulation est particulièrement incommode.

La présente invention a pour objet de remédier à ces inconvénients en proposant un procédé du type susmentionné selon lequel on introduit dans l'emballage dans lequel est conditionné le produit périssable dont on cherche à augmenter la qualité sanitaire et/ou la durée de conservation, un dispositif microbistatique à usage unique renfermant une matière réactive non pas synthétique mais naturelle, donc compatible avec la réglementation et pouvant être stocké avant utilisation par une simple protection contre l'eau et l'humidité.

Selon l'invention, ce procédé est caractérisé en ce que l'on introduit dans l'emballage, un dispositif microbistatique constitué par un contenant membranaire sélectif dans lequel est intégré une ou un mélange de crucifère(s) déshydratée(s) émettrice(s) d'isothiocyanates (ITC) en présence d'humidité, et on choisit la porosité du contenant membranaire sélectif de façon d'une part, à permettre à la ou aux crucifère(s) de produire in situ des ITC sous l'action de la seule humidité provenant du produit périssable conditionné dans l'emballage, sans adjonction d'eau extérieure, et d'autre part, de maîtriser la vitesse d'émission des ITC vers l'extérieur du dispositif microbistatique.

Le contenant membranaire sélectif mis en oeuvre conformément à l'invention est donc un contenant (i) dont la porosité depuis son environnement extérieur vers l'intérieur est adaptée au passage de la vapeur d'eau nécessaire au déclenchement de l'action de la myrosinase et (ii) dont la porosité depuis l'intérieur vers l'extérieur de son environnement extérieur est adaptée au passage régulé des vapeurs d'ITC.

Cette double sélectivité permet (i) au dispositif microbistatique de pouvoir par lui-même, en présence de la seule humidité, générer des ITC et (ii) de maîtriser la vitesse d'émission des ITC vers l'extérieur du dispositif.

Une telle crucifère correspond à un végétal traditionnellement consommable, et pouvant même le cas échéant présenter un caractère favorable pour la santé ; son utilisation ne peut pas, dans cette mesure, faire l'objet de critiques.

Selon l'invention, la crucifère déshydratée constituant la matière active du dispositif microbiostatique est en règle générale fractionnée et peut se présenter sous différentes formes en particulier sous forme de paillettes ou de préférence sous une forme pulvérulente.

Une telle poudre de crucifère peut être obtenue par simple broyage et séchage de tout ou partie de la plante en sélectionnant la granulométrie en fonction des caractéristiques recherchées.

La matière réactive générant elle-même son efficacité en présence d'humidité, les ITC émis par le dispositif microbiostatique mis en oeuvre conformément à l'invention présentent ainsi la particularité d'être natifs.

Contrairement à la plante vivante, la matière réactive mis en oeuvre conformément à l'invention renferme les précurseurs d'ITC (glusinolates) et l'enzyme (myrosinase) non pas séparés dans des compartiments différents mais en mélange.

Toutefois, cette matière réactive étant déshydratée, elle est quasiment stable lorsqu'elle est stockée sous atmosphère sèche et la réaction de formation des ITC qui nécessite la présence d'humidité ne se produit pas.

Conformément à l'invention, on peut mettre en oeuvre une large gamme de crucifères dont les multiples crucifères comestibles connus, à titre d'exemple chou, colza, radis...

Il est toutefois à noter que les espèces de crucifères cultivées pour la consommation humaine sont en règle générale sélectionnées de manière à leur enlever leur caractère piquant ce qui a pour corollaire de diminuer leur aptitude à émettre des ITC.

Par suite, selon l'invention, la crucifère utilisée peut avantageusement être la moutarde et est de préférence le raifort.

La quantité de crucifère (poids ou volume) du dispositif microbiostatique est choisie en fonction des caractéristiques de la denrée alimentaire conditionnée et du volume de l'emballage.

L'identification de ce dispositif par sa taille (poids ou volume de matière réactive) et/ou toute autre information, permet à un utilisateur éventuel d'en déduire les volumes d'ITC susceptibles d'être émis et de faire ainsi un choix adapté en fonction des volumes et natures des produits qu'il a à traiter sur le plan microbiostatique.

Dans un emballage mis en oeuvre conformément à l'invention, on pourrait craindre dans certains cas que l'équilibre biologique se trouve rompu suite à l'émission d'ITC.

Par suite, certains micro-organismes plus résistants à ces molécules que les autres et n'entrant donc plus en compétition avec eux peuvent profiter de cette modification pour se développer et envahir le milieu.

Or, ces micro-organismes plus résistants peuvent ne pas être anodins et nuire à la durée de conservation des denrées alimentaires conditionnées dans l'emballage, notamment en altérant leur texture ou leurs qualités organoleptiques, en particulier dans le cas des denrées particulièrement fragiles.

Pour éviter ce phénomène et garantir la bio protection des denrées alimentaires conditionnées dans l'emballage, on a eu l'idée conformément à l'invention d'introduire dans celui-ci des micro-organismes alimentaires inoffensifs, insensibles ou rendus résistants aux ITC dans les conditions de pH des denrées et à la température de conservation de celles-ci qui est en règle générale de l'ordre de 4°C.

Ces micro-organismes inoffensifs peuvent ainsi « occuper le terrain » et empêcher que d'autres micro-organismes pouvant avoir un caractère nocif se développent dans le milieu.

Par suite, et selon une autre caractéristique de l'invention, on introduit dans l'emballage une quantité prédéterminée de micro-organismes alimentaires susceptibles de résister et/ou de se développer parallèlement et/ou postérieurement à la présence d'ITC, ces micro-organismes alimentaires étant ajoutés sur ou dans le produit ou la denrée à titre de bio protection.

Bien entendu, si les micro-organismes alimentaires sont simplement résistants ou rendus résistants aux ITC sans être aptes à se développer en présence de ces composés, il est essentiel qu'ils soient ajoutés en quantité suffisante pour remplir leur fonction.

De tels micro-organismes peuvent être, selon les cas, incorporés dans la masse de la denrée alimentaire (produits en sauce) ou ajoutés à celle-ci en surface (produits carnés) par exemple par la technique du spray.

Ces micro-organismes peuvent être de type quelconque sans pour cela sortir du cadre de l'invention (levures, moisissures, bactéries...).

On peut à titre d'exemple choisir à cet effet des bactéries lactiques appartenant à des souches intrinsèquement résistantes ou rendues résistantes aux ITC.

Il est à noter que le procédé objet de l'invention peut être utilisé dans des domaines autres que l'industrie alimentaire, à titre d'exemple non limitatif pour l'assainissement des locaux, des containers, des surfaces ou des réfrigérateurs et des ustensiles.

L'efficacité microbiostatique d'une poudre de crucifère a été vérifiée par des tests dont les résultats sont reportés ci-dessous.

Ces travaux ont porté sur 7 germes tests mentionnés dans le tableau ci-dessous cultivés sur les milieux de culture appropriés dans des boîtes de Petri retournées de telle sorte que le milieu de culture soit dans la partie supérieure et que la poudre de crucifère soit dans la partie inférieure. La poudre de crucifère est placée dans un verre de montre avec la myrosinase et le tampon (en fait 500 mg de poudre de crucifère et 1,5 ml de tampon phosphate de potassium à 33mM (pH7) dans lesquels on ajoute 0,023 mg de myrosinase (ref. SIGMA T4528).

Les boîtes de Petri sont fermées par un film étirable et incubées à 20°C pendant 2, 5, 8 et 14 jours, après le délai prévu elles sont ouvertes, le verre de montre et son contenu sont éliminés puis les boîtes sont refermées et placées à la température optimale de croissance du microorganisme considéré.

Le volume libre dans une boîte de Petri est alors de 83 ml.

| **Un représentant des espèces suivantes** | **Justification du choix** |
|---|---|
| *Salmonella enteritidis PT4* | de 1987 à 2002, 41% des TIAC déclarés sont dues à *Salmonella* le *Serovar* et le *Lysovar* choisis viennent en tête (rapport annuel 2003, Institut de Veille Sanitaire) |
| *Listeria monocytogenes Serovar* 4b ou bien *Serovar* 1/2a | *Serovar* le plus fréquent dans des cas de TIAC *Serovar* le plus fréquent dans l'environnement, notamment dans les filières liées à la viande -Bull. liaison CTSCCV, 2000, 10(1), 11-19) |
| *Staphylococcus aureus* enterotoxinogène | 10% des TIAC déclarées entre 1987 et 2002 (rapport annuel 2003, Institut de Veille Sanitaire) |
| *Escherichia coli* 0157 : H7 | représentant des VTEC (*E.coli* producteurs de vérotoxines), virotype émergent |
| *Pseudomonas fluorescens* ou *P. putida* ou *P fragi* | représentant classique des flores psychrotrophes d'altération des aliments. ce sont de plus les principales bactéries d'altération de la volaille réfrigérée (Arnaut Rollier et al, 1999) |
| *Yarrowia lipolytica* | levure aux fortes activités protéolytique et lipolytique en général. rôle reconnu dans l'altération de la volaille fraîche ou transformée stockée à 5° (Ismail et al, 2000, Deak, 2001) |
| *Penicillium* sp. | Microorganisme sensible aux ITC. Témoin positif de l'efficacité du dispositif |

### Cas de la poudre de raifort :

- Les boîtes ensemencées avec *P. expansum* (à raison de 1,7x10E7 ufc/ml) présentent 100% d'inhibition au moins jusqu'à 14 jours et restent indemne même 7 jours après retrait de la poudre des boîtes de Petri.
- Avec *S. aureus* ensemencé en culture pure à 5,5x10E8 ufc/ml l'inhibition est totale au moins jusqu'à J+3, pour un ensemencement à 5,5x10E5 ufc/ml l'inhibition est totale au moins jusqu'à 14 jours et le reste même 7 jours après retrait de la poudre des boîtes de Petri.
- Pour *E. coli,* l'inhibition est totale jusqu'à 5 jours pour un ensemencement à 3x10E8 ufc/ml et au moins jusqu'à 14 jours pour un ensemencement à 3x10E2 ufc/ml. Par contre l'inhibition est au moins partiellement levée après retrait de la poudre des boîtes de Petri.
- Pour *L. monocytogenes,* l'inhibition est totale jusqu'à au moins 14 jours pour un ensemencement à 4,3x10E8 ufc/ml et cette inhibition se maintient au moins 14 jours après retrait de la poudre des boîtes de Petri.
- Pour *S. enteridis,* l'inhibition est totale jusqu'à au moins 14 jours pour un ensemencement à 6,1x10E8 ufc/ml et l'inhibition est maintenue au moins 14 jours après retrait de la poudre des boîtes de Petri.
- Pour *P. fluorescens,* l'inhibition est totale jusqu'à au moins 14 jours pour un ensemencement à 5,6x10E8 ufc/ml et elle est maintenue pendant au moins 14 jours après retrait de la poudre des boîte de Petri.
- Pour *Y. lipolytica,* l'inhibition est totale jusqu'à au moins 14 jours pour un ensemencement à 9,4x10E5 ufc/ml et elle est maintenue au moins 14 jours après retrait de la poudre des boîtes de Petri..

Une seconde expérimentation avec une incubation à 8°C au lieu de 20°C a montré des inhibitions encore supérieures notamment pour *E. coli* l'inhibition est totale jusqu'à 15 jours à 8°C pour un ensemencement à 3x10E8 ufc/ml.

### Cas de la poudre du radis blanc :

- Pour *P. expansum* un retard de croissance et une inhibition partielle ont été observés à 20°C notamment lors d'un ensemencement à 1,2x10E3 ufc/ml. A la même concentration mais à 8°C, il y a une inhibition totale jusqu'à 10 jours puis une inhibition partielle au moins jusqu'à 15 jours.
- Pour *P. fluorescens* à 4,1x10E3 ufc/ml, un retard de croissance et une inhibition partielle ont été observés jusqu'à 14 jours à 20°C. Il y a une inhibition totale jusqu'à 3 jours puis une inhibition partielle jusqu'à 14 jours à 8°C.
- Pour *E. coli* à 4,7x10E3 ufc/ml, seul un retard de croissance est observé à 20°C alors qu'à 8°C il y a inhibition totale jusqu'à 10 jours puis inhibition partielle jusqu'à 14 jours pour un ensemencement à 3x10E3 ufc/ml.
- Pour *S. aureus* à 2,2x10E3 ufc/ml un retard de croissance avec inhibition partielle est observé jusqu'à 14 jours à 20°C alors qu'à 8°C seul un léger retard de croissance est observé pour une population de 3x10E3 ufc/ml.

### Cas du radis noir :

Les résultats sont de même nature que pour les radis blancs, toutefois pour *P*. *expansum* à 8°C l'inhibition est seulement partielle.

### Application sous forme de sachets :

Des essais complémentaires ont été réalisés avec 3 types de sachets dénommés OS, HV et FT contenant 250 mg de poudre de raifort, les sachets ont été utilisés avec et sans hydratation (1,5 ml de tampon) préalable par introduction dans les boîtes de Petri en lieu et place du verre de montre utilisé dans les expérimentations décrites précédemment.

Les sachets ont tous les mêmes dimensions à savoir 50*50 mm et sont constitués de matériaux différents présentant des porosités à l'air et à la vapeur d'eau différentes.
- OS est un sachet adhésif constitué d'un adhésif (a) permanent à base acrylique agréé pour contact alimentaire, appliqué à raison de 42g/m2 sur une pellicule de PET (b) (polyéthylène téréphtalate) de 12 microns, elle-même contrecollée sur une pellicule de PEBD (c) (polyéthylène basse densité) de 50 microns, soudée sur son pourtour sur le matériau constituant la face perméable du sachet. Cette face perméable est constituée d'une pellicule de non-tissé de polyéthylène (Tyvek®) (d) de 42,5g/m2 contrecollée sur une pellicule de 12 microns de PET perforée imprimée sur sa face interne. Le non-tissé (d) est soudé sur le polyéthylène basse densité (c). La perméabilité de la membrane Tyvek®/PET perforé (d+e) est de l'ordre de 100 ml/mn au porosimètre Bendtsen.
- HV est un sachet constitué d'une face imperméable en complexe PET/PEBD (PET 12 microns, PEBD blanc 50 microns), le PEBD est soudé sur un matériau non-tissé de PE (Tyvek®) 75g/m2 enduit sur sa face externe d'un vernis hydrophobe (5g/m2). La porosité Bendtsen du non-tissé enduit est de l'ordre de 100 à 500 ml/mn.
- FT est un sachet dont les deux faces sont perméables et identiques, le matériau est constitué de trois pellicules ; à l'intérieur une pellicule de PP (polypropylène blanc 30 microns) perforée, une pellicule intermédiaire de papier non-tissé et une pellicule extérieure de PET (12 microns) perforée, la pellicule interne de PP est soudée sur elle-même pour former le sachet. La porosité Bendtsen de ce matériau triplex est typiquement comprise entre 50 et 100 ml/mn.

Avec *E. coli* à 20°C en culture pure à 4,6x10E8 ufc/ml, l'inhibition est totale jusqu'à 7 jours puis partielle au moins jusqu'à 14 jours. Cette inhibition partielle est plus forte pour les sachets OS et HV que pour les sachets FT. L'inhibition partielle est plus marquée pour les sachets hydratés mais il apparaît nettement que l'hydratation peut se réaliser spontanément par absorption de vapeur d'eau cédée par le substrat (gélose dans le cas de cette expérimentation).

Pour un ensemencement à 4,6x10E3 ufc/ml de *E*. *coli*, l'inhibition est totale au moins jusqu'à 14 jours sauf dans le cas des sachets FT non hydratés, dans ce cas si l'inhibition n'est pas totale le taux de réduction est cependant de l'ordre de 99,87%.

Cette expérimentation montre que les résultats antérieurs sont extrapolables à la mise en oeuvre de poudre de crucifère conditionnée en sachet comme emballage actif microbiostatique.

### Remarques :

La poudre de raifort est obtenue à partir de racines de raifort frais correctement nettoyées et lavées, coupées et séchées. Les copeaux ainsi obtenus sont réduits en poudre.

La poudre de radis blanc est obtenue par le même procédé de racines de raids blanc dit de Munich.

La poudre de radis noir est obtenue quant à elle à partir de racines de radis noir.

## Revendications

1. Procédé permettant d'augmenter la qualité sanitaire et/ou la durée de conservation d'un produit périssable conditionné dans un emballage fortement étanche aux gaz, notamment d'un produit alimentaire tel qu'un produit frais ou semi-frais près à l'emploi ou un plat préparé industriel,
**caractérisé en ce que**
l'on introduit dans l'emballage, un dispositif microbistatique constitué par un contenant membranaire sélectif dans lequel est intégré une ou un mélange de crucifère(s) déshydratée(s) émettrice(s) d'isothiocyanates (ITC) en présence d'humidité, et on choisit la porosité du contenant membranaire sélectif de façon d'une part, à permettre à la ou aux crucifère(s) de produire in situ des ITC sous l'action de la seule humidité provenant du produit périssable conditionné dans l'emballage, sans adjonction d'eau extérieure, et d'autre part, de maîtriser la vitesse d'émission des ITC vers l'extérieur du dispositif microbistatique.

2. Procédé selon la revendication 1,
**caractérisé en ce que**
la crucifère est sous forme de poudre déshydratée.

3. Procédé selon l'une quelconque des revendications 1 et 2,
**caractérisé en ce que**
la crucifère est du raifort.

4. Procédé selon l'une quelconque des revendications 1 à 3,
**caractérisé en ce que**
l'on introduit dans l'emballage une quantité prédéterminée de micro-organismes alimentaires susceptibles de résister et/ou de se développer parallèlement et/ou postérieurement à la présence d'ITC, ces micro-organismes alimentaires étant ajoutés sur ou dans le produit ou la denrée à titre de bio protection.

5. Procédé selon la revendication 4,
**caractérisé en ce que**
les micro-organismes alimentaires sont des bactéries lactiques.

## Claims

1. Method enabling the sanitary quality or shelf life of a perishable product packaged in a pack tightly sealed against ingress by gases to be increased, in particular a food product such as a fresh or semi-fresh, ready-to-use product or an industrially prepared meal,
**characterised in that**
a microbistatic device comprising a selective membrane-type container in which a or a mixture of dehydrated crucifer(s) which emit (s) isothiocyanates (ITC)in the presence of humidity is integrated, and the porosity of the selective membrane-type container is selected so that, on the one hand, the crucifer(s) produce (s) ITCs in situ under the action of only the humidity emanating from the perishable product packaged in the pack without adding water from outside and, on the other hand, with a view to controlling the speed at which ITCs are emitted to the exterior of the microbistatic device.

2. Method as claimed in claim 1,
**characterised in that**
the crucifer is in the form of dehydrated powder.

3. Method as claimed in any one of claims 1 and 2,
**characterised in that**
the crucifer is horseradish.

4. Method as claimed in any one of claims 1 to 3,
**characterised in that**
a pre-determined quantity of food micro-organisms likely to resist and/or develop during and/or after the presence of ITCs is introduced into the pack, these micro-organisms being placed on or in the product or foodstuff by way of bio-protection.

5. Method as claimed in claim 4,
**characterised in that**
the food micro-organisms are lactic bacteria.

## Patentansprüche

1. Verfahren mit dem die hygienische Beschaffenheit und/oder die Haltbarkeit eines verderblichen Produktes verbessert werden kann, das in einer äußerst gasdichten Verpackung enthalten ist, insbesondere eines Nahrungsmittels, wie z. B. ein jeweils gebrauchsfertiges frisches oder vorbereitetes frisches Produkt oder ein industriell hergestelltes Fertiggericht,
**dadurch gekennzeichnet,**
**dass** man in die Verpackung eine mikrobistatische Vorrichtung einlegt, die von einem selektiven Membranbehältnis gebildet ist, in das ein dehydratisierter Kreuzblütler oder eine Mischung aus dehydratisierten Kreuzblütlern aufgenommen ist, von dem bzw. von der in Gegenwart von Feuchtigkeit Isothiocyanate (ITC) abgegeben werden, und man die Porosität des selektiven Membranbehältnisses so auswählt, dass einerseits der oder die Kreuzblütler in natürlicher Umgebung allein unter dem Einfluss der von dem sich in der Verpackung befindlichen verderblichen Produkt herrührenden Feuchtigkeit ITC erzeugen können, ohne Wasser von außen hinzuzufügen, und dass andererseits die Abgabegeschwindigkeit von ITC nach außerhalb der mikrobistatischen Vorrichtung beherrscht werden kann.

2. Verfahren nach Anspruch 1, **dadurch gekennzeichnet, dass** der Kreuzblütler die Form von dehydratisiertem Pulver hat.

3. Verfahren nach einem der Ansprüche 1 und 2, **dadurch gekennzeichnet, dass** es sich bei dem Kreuzblütler um Meerrettich handelt.

4. Verfahren nach einem der Ansprüche 1 bis 3, **dadurch gekennzeichnet, dass** man eine vorbestimmte Menge von Nahrungsmittel-Mikroorganismen in die Verpackung einlegt, die in der Lage sind, vorhandenen ITC zu widerstehen und/oder sich parallel und/oder später zu diesen zu entwickeln, wobei diese Nahrungsmittel-Mikroorganismen als Bio-Schutz auf oder in dem Produkt oder Lebensmittel hinzugefügt werden.

5. Verfahren nach Anspruch 4, **dadurch gekennzeichnet, dass** die Nahrungsmitel-Mikroorganismen Milchbakterien sind.
